# EUROPÄISCHE PATENTSCHRIFT

(11) **EP 0 446 326 B1**
(45) Veröffentlichungstag und Bekanntmachung des Hinweises auf die Patenterteilung: **31.08.1994**
(21) Anmeldenummer: 90914118.6
(22) Anmeldetag: 26.09.1990
(51) Int. Cl.: D03J 1/14, G05B 19/04

(54) **MASCHINE ZUM AUTOMATISCHEN EINZIEHEN VON KETTFÄDEN**
MACHINE FOR AUTOMATICALLY FEEDING WARP THREADS
MACHINE POUR RENTRER AUTOMATIQUEMENT LES FILS DE CHAINE

(30) Priorität: 04.10.1989 CH 3633/89
(43) Veröffentlichungstag der Anmeldung: 18.09.1991
(73) Patentinhaber: Stäubli AG, 8810 Horgen (CH)
(72) Erfinder: WILHELM, Hans, CH-7000 Chur (CH); SCHLEGEL, Karl, CH-9479 Oberschan (CH)
(74) Vertreter: Ellenberger, Maurice
(86) Internationale Anmeldenummer: CH9000227
(87) Internationale Veröffentlichungsnummer: WO9105099

(56) Entgegenhaltungen:
- EP-A- 328 680
- EP-A- 0 302 364
- FR-A- 1 593 584

## Beschreibung

Die Erfindung betrifft eine Maschine zum automatischen Einziehen von Kettfäden in entsprechende Elemente einer Webmaschine, mit einem Einziehorgan, mit Mitteln zur Handhabung der genannten Elemente, und mit einer Steuerstufe zur Steuerung der verschiedenen Funktionen der Einziehmaschine.

Bei einer aus der US-A-3 681 825 bekannten Webketteneinziehmaschine dieser Art sind die einzelnen Funktionen über mechanische Organe wie Nocken, Steuerscheiben und dergleichen gesteuert und daher zwangsläufig miteinander verknüpft. Somit können einzelne Funktionsschritte nicht autonom und unabhängig von den anderen durchgeführt werden, sondern es läuft immer ein alle Funktionen umfassender Zyklus ab. Dies hat zur Folge, dass Fehloperationen einzelner Funktionsstufen nicht wiederholt und damit automatisch korrigiert werden können, sondern entweder in Kauf genommen oder bei einem Maschinenstillstand durch einen Eingriff von Hand repariert werden müssen.

Wenn beispielsweise eine Weblitze nicht korrekt abgeteilt wird, dann kann der Abteilvorgang nicht zwei- oder dreimal wiederholt werden, weil ja dabei das Einziehorgan eine entsprechende Anzahl von Einziehoperationen durchführen und auch das Webblatt um entsprechend viele Zähne weitertransportiert würde. Derartige Abteilfehler treten aber in der Praxis immer wieder auf und führen somit bei den bekannten Einziehmaschinen zu einer Verringerung der Produktivität.

Durch die Erfindung soll nun eine Einziehmaschine angegeben werden, die diesen Nachteil nicht aufweist, bei der also gezielte Eingriffe in den Ablauf der einzelnen Funktionsstufen möglich sind, ohne dass in den anderen Funktionsstufen zwangsläufig entsprechende Abläufe ausgelöst werden.

Diese Aufgabe wird wie im Anspruch 1 dargelegt ist erfindungsgemäss dadurch gelöst, dass:
a. Die Einziehmaschine aus Modulen für die verschiedenen Funktionen aufgebaut ist und Arbeitsmodule für die Durchführung des Einziehprozesses aufweist;
b. die einzelnen Module funktionsfähige, eigenständige Einheiten bilden und miteinander über Schnittstellen verbunden sind, wobei die Arbeitsmodule einen mechanischen Teil und einen Modulrechner aufweisen; und
c. die Module von einem übergeordneten Rechner gesteuert sind, wobei die Kommunikation zwischen den einzelnen Modulen ausschliesslich über diesen übergeordneten Rechner erfolgt.

Weitere Ausführungen der Erfindung sind in den Ansprüchen 2-10 dargelegt.

Durch die erfindungsgemässe Lösung sind also die einzelnen Funktionsstufen durch autonome Module gebildet, von denen jedes praktisch eine selbstständige Maschine darstellt. Da diese autonomen Module nur über den übergeordneten Rechner miteinander kommunizieren, ist es kein Problem, bei Bedarf in den Modulen isolierte Prozesse ablaufen zu lassen, welche auf das jeweilige Modul beschränkt sind und keine Auswirkungen auf andere Module haben. Wenn also beispielsweise eine Weblitze nicht richtig abgeteilt wurde, dann kann der entsprechende Vorgang mehrfach repetiert werden, wobei die restliche Maschine während dieser Zeit sozusagen steht und erst nach dem erfolgreichen Abteilversuch wieder normal weiterläuft. Ein weiterer Vorteil der erfindungsgemässen Lösung liegt darin, dass der modulare Aufbau der Einziehmaschine deren massgeschneiderte Anpassung an individuelle Kundenwünsche ermöglicht.

Nachfolgend wird die Erfindung anhand eines Ausführungsbeispiels und der Zeichnungen näher erläutert; es zeigt:
- Fig. 1: eine perspektivische Gesamtdarstellung einer erfindungsgemässen Einziehmaschine,
- Fig. 2: ein Funktionsschema der Einziehmaschine von Fig. 1,
- Fig. 3: ein Detail von Fig. 2; und
- Fig. 4: ein Datenflussdiagramm.

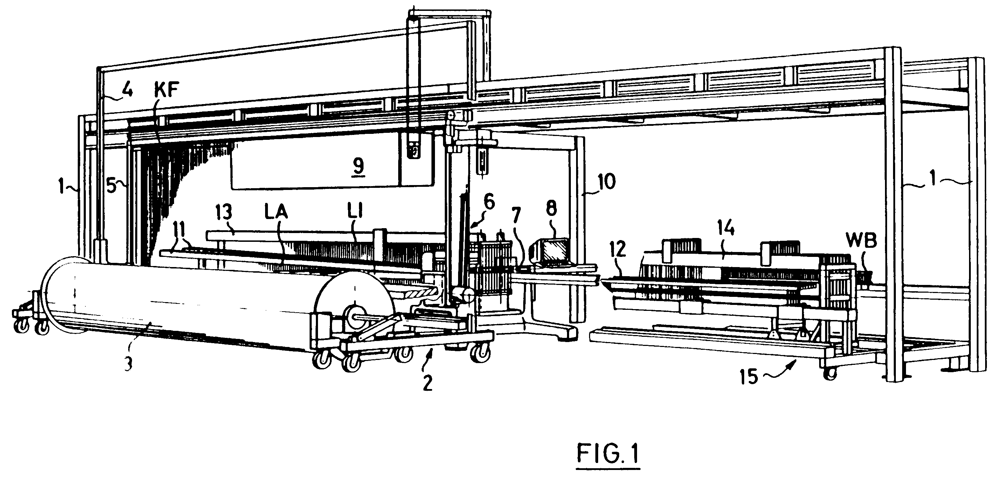

Gemäss Figur 1 besteht die Einziehmaschine aus einem Grundgestell 1 und aus verschiedenen in diesem angeordneten Baugruppen, welche jede ein Funktionsmodul darstellen. Vor dem Grundgestell 1 ist ein Kettbaumwagen 2 mit einem auf diesem angeordneten Kettbaum 3 zu erkennen. Der Kettbaumwagen 3 enthält ausserdem eine Hebevorrichtung 4 zur Halterung eines Rahmens 5, auf welchem die Kettfäden KF aufgespannt sind. Dieses Aufspannen erfolgt vor dem eigentlichen Einziehen und an einem von der Einziehmaschine getrennten Ort, wobei der Rahmen 5 am unteren Ende der Hebevorrichtung 4 in unmittelbarer Nähe zum Kettbaum 3 positioniert ist. Für das Einziehen wird der Kettbaumwagen 2 mit Kettbaum 3 und Hebevorrichtung 4 an die sogenannte Aufrüstseite der Einziehmaschine gefahren und der Rahmen 5 wird von der Hebevorrichtung 4 nach oben gehoben und in das Grundgestell 1 eingehängt, wo er dann die dargestellte Lage einnimmt.

Der Rahmen 5 und der Kettbaum 3 werden in Längsrichtung des Grundgestells 1 verschoben. Bei dieser Verschiebung werden die Kettfäden KF an einer Fadentrennstufe 6 vorbeigeführt und dabei separiert und abgeteilt. Nach dem Abteilen werden die Kettfäden KF abgeschnitten und einer Einziehnadel 7 präsentiert, welche Bestandteil des sogenannten Einzugsmoduls bildet. Für das Abteilen der Kettfäden kann beispielsweise die in der Webkettenknüpfmaschine USTER TOPMATIC (USTER - eingetragenes Warenzeichen der Zellweger Uster AG) verwendete Abteileinrichtung eingesetzt werden.

Neben der Einziehnadel 7 ist ein Bildschirmgerät 8 zu erkennen, welches zu einer Bedienungsstation gehört und zur Anzeige von Maschinenfunktionen und Maschinenfehlfunktionen und zur Dateneingabe dient. Die Bedienungsstation, die Teil eines sogenannten Programmiermoduls bildet, enthält auch eine Eingabestufe für die manuelle Eingabe gewisser Funktionen, wie beispielsweise Kriechgang, Start/Stop, Repetition von Vorgängen, und dergleichen. Die Steuerung der Einziehmaschine erfolgt durch ein einen Steuerrechner enthaltendes Steuermodul, welches in einem Steuerkasten 9 angeordnet ist. Dieser Steuerkasten enthält neben dem Steuerrechner für jedes sogenannte Hauptmodul einen Modulrechner, wobei die einzelnen Modulrechner vom Steuerrechner gesteuert und überwacht sind. Die Hauptmodule der Einziehmaschine sind neben den schon erwähnten Modulen Einzugsmodul, Garnmodul, Steuermodul und Programmiermodul, noch das Litzen-, das Lamellen- und das Blattmodul.

Die Fadentrennstufe 6, welche der Einziehnadel 7 die einzuziehenden Kettfäden KF präsentiert, und die Bewegungsbahn der Einziehnadel 7, welche vertikal zur Ebene der aufgespannten Kettfäden KF verläuft, bestimmen eine Ebene, welche die schon erwähnte Aufrüstseite von der sogenannten Abrüstseite der Einziehmaschine trennt. An der Aufrüstseite werden die Kettfäden und die einzelnen Elemente, in welche die Kettfäden einzuziehen sind, zugeführt, und an der Abrüstseite kann das sogenannte Geschirr (Litzen, Lamellen und Blatt) mit den eingezogenen Kettfäden entnommen werden. Während des Einziehens werden der Rahmen 5 mit den Kettfäden KF und der Kettbaumwagen 2 mit dem Kettbaum 3 an der Fadentrennstufe 6 vorbei nach rechts bewegt, wobei die Einziehnadel 7 dem Rahmen 5 nacheinander die auf diesem aufgespannten Kettfäden KF entnimmt.

Wenn alle Kettfäden KF eingezogen sind und der Rahmen 5 leer ist, befindet sich der letztere zusammen mit dem Kettbaumwagen 2 und dem Kettbaum 3 auf der Abrüstseite und kann vom Grundgestell 1 abgenommen werden.

Unmittelbar hinter der Ebene der Kettfäden KF sind die Kettfadenwächterlamellen LA angeordnet, hinter diesen die Weblitzen LI und noch weiter hinten das Webblatt. Die Lamellen LA werden in Handmagazinen aufgestapelt, und die vollen Handmagazine werden in geneigt angeordnete Zuführschienen 11 gehängt, auf denen sie nach rechts, zur Einziehnadel 7 hin, transportiert werden. Dort werden sie separiert und in die Einzugsposition gebracht. Nach erfolgtem Einzug gelangen die Lamellen LA auf Lamellentragschienen 12 auf die Abrüstseite.

Die Litzen LI werden auf Schienen 13 aufgereiht und auf diesen manuell oder automatisch zu einer Separierstufe verschoben. Dann werden die Litzen LI einzeln in ihre Einziehposition gebracht und nach erfolgtem Einzug auf die entsprechenden Webschäfte 14 auf der Abrüstseite verteilt. Das Webblatt wird ebenfalls schrittweise an der Einziehnadel 7 vorbeibewegt, wobei der entsprechende Blattzahn für den Einzug geöffnet wird. Nach dem Einzug befindet sich das Blatt ebenfalls auf der Abrüstseite. Rechts neben den Webschäften 14 ist ein Teil des Webblatts WB zu erkennen. Diese Darstellung ist rein illustrativ zu verstehen, weil sich das Webblatt bei der dargestellten Position des Rahmens 5 selbstverständlich auf der Aufrüstseite befindet.

Wie der Figur weiter entnommen werden kann, ist auf der Abrüstseite ein sogenannter Geschirrwagen 15 vorgesehen. Dieser wird zusammen mit den darauf befestigten Lamellentragschienen 12, Webschäften 14 und einer Halterung für das Webblatt in das Grundgestell 1 in die dargestellte Position eingeschoben und trägt nach dem Einziehen das Geschirr mit den eingezogenen Kettfäden KF. Zu diesem Zeitpunkt befindet sich der Kettbaumwagen 2 mit dem Kettbaum 3 unmittelbar vor dem Geschirrwagen 15. Nun wird mittels der Hebevorrichtung 4 das Geschirr vom Geschirrwagen 15 auf den Kettbaumwagen 2 umgeladen, der dann den Kettbaum 3 und das eingezogene Geschirr trägt und an die betreffende Webmaschine oder in ein Zwischenlager gefahren werden kann.

Die Funktionsweise der einzelnen Baugruppen ist nicht Gegenstand der Erfindung und soll daher hier nicht weiter erläutert werden. Wesentlich ist, dass die Funktionen auf mehrere Module verteilt sind, und dass diese Module praktisch autonome Maschinen darstellen, welche von einem gemeinsamen Steuerrechner gesteuert sind. Die Querverbindungen zwischen den einzelnen Modulen laufen über diesen übergeordneten Steuerrechner, und es existieren keine direkten Querverbindungen zwischen den einzelnen Modulen. Wenn man die Struktur der beschriebenen Einziehmaschine betrachtet, dann erhält das System Einziehmaschine Einzugsdaten, Steuerdaten, Geschirr und Garn sowie Energie und liefert aufbereitete Betriebsdaten, Zustandsinformationen und das eingezogene Geschirr.

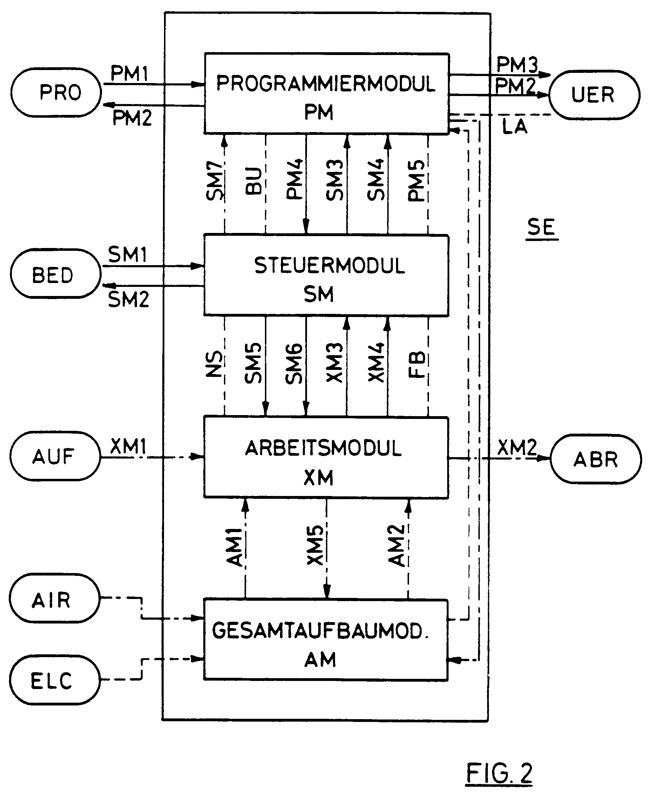

Dieser Aufbau mit den System- und Modulschnittstellen ist in Fig. 2 schematisch dargestellt. Die mit SE bezeichnete Einziehmaschine enthält darstellungsgemäss das Programmiermodul PM, das Steuermodul SM, ein sogenanntes Gesamtaufbaumodul AM und mindestens ein Arbeitsmodul XM, das stellvertretend für eines der schon genannten Module, Garnmodul, Lamellenmodul, Litzenmodul, Blattmodul und Einzugsmodul steht. Wenn mehrere dieser Module vorhanden sind, dann sind entsprechend viele Arbeitsmodule XM vorzusehen und parallel anzuordnen. In der Figur sind drei Arten von Verbindungen symbolisiert, und zwar bezeichnet eine voll ausgezogene Linie eine Softwareverbindung, eine gestrichelte Linie eine Hardwareverbindung und eine strichpunktierte Linie eine mechanische Verbindung.

Das Programmiermodul PM, welches auch als Leitmodul bezeichnet werden könnte, weist eine Programmierschnittstelle PRO und eine Schnittstelle UER zu einem übergeordneten Rechner (Host) auf. Die Programmierschnittstelle PRO liefert an das Programmiermodul PM Einzugsdaten PM1 und erhält von diesem Zustandsinformationen PM2. An den Host UER liefert das Programmiermodul PM aufbereitete Betriebsdaten PM3 und ebenfalls Zustandsinformationen PM2. Ausserdem besteht zwischen Programmiermodul und Host eine durch ein LAN (= Local Area Network) gebildete Hardwareverbindung LA.

Die Funktionen des Programmiermoduls sind die folgenden: Bedienerführung zur Programmerstellung und Maschinenbedienung, Datenkommunikation mit dem Steuerrechner (Steuermodul SM), Datenmanagement, Verarbeitung der Roh-Scandaten aus der Scandaten-Generierung, Anzeige von Maschinenfehlfunktionen und Kommunikation mit übergeordneten Systemen.

Das Steuermodul SM weist eine Bedienerschnittstelle BED auf, von welcher es Steuerdaten SM1 erhält und an welche es Zustandsinformationen SM2 liefert. Darstellungsgemäss ist das Steuermodul SM auch mit dem Programmiermodul PM und mit dem Arbeitsmodul oder den Arbeitsmodulen XM verbunden. An das Programmiermodul PM liefert das Steuermodul SM rohe Betriebsdaten SM3 und rohe Zustandsinformationen SM4, an das Arbeitsmodul XM Moduleingaben SM5 und Modulkommandos SM6.

Vom Programmiermodul PM erhält das Steuermodul SM aufbereitete Einzugsdaten PM4 und stabilisierte Elektrizität PM5. Ausserdem besteht zwischen diesen beiden Modulen eine Befestigungsverbindung SM7 und eine AT-Busverbindung BU. Vom Arbeitsmodul (von jedem Arbeitsmodul) XM erhält das Steuermodul SM den Modulzustand XM3 und Modulabfragedaten XM4. Hardwaremässige Verbindungen zwischen Arbeitsmodul XM und Steuermodul SM sind Notstop NS und Feldbus FB.

Wie schon erwähnt wurde, enthält das Steuermodul SM einen übergeordneten Steuerrechner, der die Rechner der einzelnen Arbeitsmodule im Echtzeitbetrieb steuert und überwacht. Jedes der genannten Arbeitsmodule XM enthält einen eigenen Modulrechner. Die Ueberwachungsfunktion wird zur Scandatengenerierung und zur Weiterleitung an den Host UER benutzt.

Das Gesamtaufbaumodul AM dient zur Ausführung statischer Hilfsfunktionen, insbesondere von Halte- und Befestigungsfunktionen, und weist zwei Schnittstellen ELC und AIR für die Versorgung der Einziehmaschine SE mit elektrischer und pneumatischer Energie auf. Elektrische Energie und Luft werden vom Gesamtaufbaumodul AM aufbereitet und an das Programmiermodul PM (nur aufbereitete Elektrizität) und das Arbeitsmodul XM (aufbereitete Elektrizität und aufbereitete Luft) weitergegeben.

Das Arbeitsmodul XM weist eine Aufrüsterschnittstelle AUF und eine Abrüsterschnittstelle ABR auf. Es erhält von der Aufrüsterschnittstelle AUF Geschirr und Garn XM1 und liefert an die Abrüsterschnittstelle ABR das eingezogene Geschirr XM2. Neben diesen Verbindungen und denjenigen zum Steuermodul SM bestehen noch drei Verbindungen zum Gesamtaufbaumodul AM, eine Befestigungsverbindung XM5 und zwei Verbindungen AM1 und AM2, über die das Arbeitsmodul XM aufbereitete Luft bzw. aufbereitete Elektrizität bezieht.

Wie schon erwähnt wurde, bezeichnet das Arbeitsmodul XM stellvertretend eines oder mehrere der folgenden Module: Garnmodul, Einzugsmodul, Litzenmodul, Lamellenmodul, Blattmodul.Diese Module sind selbst wieder in Teilmodule aufgeteilt, die nachstehend zusammen mit ihren Funktionen angegeben sind:

Das Garnmodul übernimmt sämtliche Handhabungsfunktionen mit dem Kettbaum und der Kettfadenschicht und weist folgende Teilmodule auf:
- Handhabung des Kettbaums: Transport entlang der Maschine und Wegführen, Ermöglichung der Uebernahme der Fadenschicht durch das nächste Teilmodul "Präsentation der Fadenschicht" und Ermöglichung des Abrüstens.
- Präsentation der Fadenschicht: Uebernahme von "Handhabung des Kettbaums" und Transport an "Garnseparierung".
- Garnseparierung: Separierung der Kettfäden und Weitergabe an "Garnpräsentation".
- Garnpräsentation: Uebernahme der Fäden von "Garnseparierung", Transport der Fadenenden in Einzugsposition und Präsentation an Einzugsmodul, Halten des Fadens vor dem Einzug und während des Einzugs in einem definierten Zustand.

Das Einzugsmodul übernimmt die Fäden von der "Garnpräsentation" und zieht jeden Faden durch Lamelle, Litze und Blatt ein. Ausserdem wird sichergestellt, dass der eingezogene Faden vor dem nächsten Einzug aus dem Einzugsmechanismus entfernt wird.

Das Litzenmodul arbeitet die Litzen vom Magazinstapel bis zur eingezogenen Litze auf dem Schaft ab und besteht aus folgenden Teilmodulen:
- Litzenmagazinierung: Entgegennahme der Litzen vom Anwender ab Stapel, Zwischenspeicherung der Lizenstapel, Weitergabe der Litzenstapel an das nächste Teilmodul.
- Auftrennung der Litzenstapel: Dieses Teilmodul, das nur dann eingesezt wird, wenn Duplexlitzen gemischt auf einem Stapel auf die Maschine kommen, dient zum Sortieren derartiger Litzenstapel in linke und rechte Litzen.
- Litzenseparierung: Aufnahme des Litzenstapels, Separierung der Litzen vom Stapel, Weitergabe jeder Litze an das Teilmodul "Litzenpositionierung".
- Litzenpositionierung: Uebernahme der Litze vom Teilmodul "Litzenseparierung", Transport der Litze zur Einzugsposition, Positionierung der Litze seitlich und vertikal, Transport der Litze mit dem eingezogenen Kettfaden zur vorbestimmten Schaftposition, Uebergabe der Litze an den jeweiligen Schaft.
- Halten der Schäfte: Halten der Schäfte während des Einziehens zur Ermöglichung der Uebergabe der Litzen von der "Litzenpositionierung" auf die Schäfte, Zuführen der Schäfte und Lamellentragschienen vor und Wegführen nach dem Einziehen (gekoppelt mit dem Teilmodul "Handhabung des Kettbaums"), Uebernahme des Webblatts nach dem Einziehen für den Abrüstvorgang, Ermöglichung des Abrüstens.
- Litzenförderung: Förderung der eingezogenen Litzen innerhalb der Schäfte von der Abfüllseite an die andere Seite, Halten der Litzentragschienen auch im Fall von geschlossenen Endösen, Ermöglichung des Auf- und Abrüstvorgangs mit dem Teilmodul "Halten der Schäfte".

Das Lamellenmodul arbeitet die Lamellen vom Magazinstapel bis zur eingezogenen Lamelle auf der Tragschiene ab. Es besteht aus folgenden Teilmodulen:
- Lamellenmagazinierung: Entgegennahme der Lamellen vom Anwender ab Stapel, Zwischenspeicherung der Lamellenstapel, bedarfsweise Weitergabe der Lamellenstapel an das nächste Teilmodul "Lamellenseparierung".
- Lamellenseparierung: Aufnahme der Lamellenstapel, Separierung jeder Lamelle vom Stapel, Weitergabe der Lamelle an das Teilmodul "Lamellenverteilung".
- Lamellenverteilung: Uebernahme der Lamelle vom Teilmodul "Lamellenseparierung", Transport der Lamelle zur Einzugsposition, Positionierung der Lamelle in der Einzugsposition, Transport der Lamelle mit dem eingezogenen Faden zu einer bestimmten Tragschienenposition, Uebergabe der Lamelle an das Teilmodul "Lamellenförderung".
- Lamellenförderung: Verteilung der eingezogenen Lamellen auf die gesamte Länge der Tragschiene, Halten der Lamellentragschiene zur Ermöglichung eines durchgängigen Lamellentransports auf der ganzen Tragschienenlänge, Ermöglichung des Auf- und Abrüstvorgangs mit dem Teilmodul "Halten der Schäfte".

Das Blattmodul ist für die Handhabung des Webblatts zuständig und sorgt dafür, dass die eingezogenen Fäden nicht mehr zurückrutschen können. Es besteht aus folgenden Teilmodulen:
- Blattpräsentation: Bewegung des Blatts in die gewünschte Position, Präsentation der Blattlücke in der Einziehposition, Ermöglichung des Einzugs mit dem Einzugsmodul.
- Garnfixierung: Uebernahme des Fadens vom Einzugsmodul, Fixierung des Fadens nach erfolgtem Einziehen, Weitertransport der eigezogenen Fadenschicht.

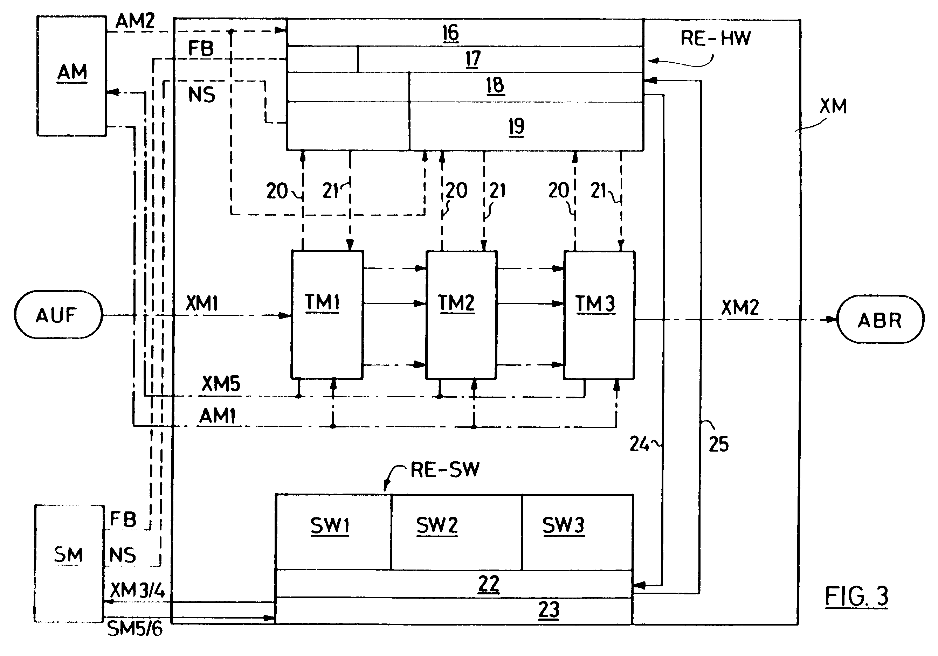

In Fig. 3 ist ein derartiges Arbeitsmodul XM schematisch dargestellt. Man erkennt in Analogie zu Fig. 2 die Aufrüster- und die Abrüsterschnittstelle AUF bzw. ABR und das Gesamtaufbaumodul AM sowie das Steuermodul SM und die einzelnen Verbindungen zu diesen Schnittstellen bzw. Modulen. Das dargestellte Arbeitsmodul weist drei (allgemein: n) Teilmodule TM1 bis TM3 für die Durchführung der jeweiligen Funktionen auf. Das erste Teilmodul TM1 wird mit Geschirrelementen oder Garn beschickt (XM1), das letzte Teilmodul TM3 liefert das eingezogene Geschirr (XM2) zur Abrüsterschnittstelle ABR. Alle Teilmodule sind mechanisch befestigt (XM5) und werden mit aufbereiteter Luft versorgt (AM1). Zwischen den einzelnen Teilmodulen erfolgt ein interner Materialfluss und eine Uebergabedetektion und es bestehen interne Befestigungen, was durch die Verbindungen zwischen den Teilmodulen TM1 und TM2 bzw. TM2 und TM3 angedeutet ist.

Wie schon erwähnt wurde, enthält jedes Arbeitsmodul XM einen Modulrechner. Dieser ist in Fig. 3 in zwei Teile aufgeteilt, und zwar in einen Hardwareteil RE-HW und in einen Softwareteil RE-SW, wobei der letztere für jedes Teilmodul TM1 bis TM3 einen Block SW1, SW2 bzw. SW3 aufweist. Der Hardwareteil RE-HW, dessen Speisung mit 16 bezeichnet ist, besteht aus einer Mikroprozessor-Karte 17, Input-/Outputkarten 18, einer Treiber-/Anpassungsstufe 19 und aus dem Feldbus AT. Der Hardwareteil RE-HW wird mit aufbereiteter Elektrizität versorgt (AM2) und empfängt über Leitungen 20 Signale von Sensoren der einzelnen Teilmodule, verarbeitet diese Signale und gibt an die Teilmodule über Leitungen 21 entsprechende Steuersignale ab.

Der Softwareteil RE-SW enthält neben den den Teilmodulen zugeordneten Blöcken SW1, SW2 und SW3 noch eine Hardwarestufe 22 und eine Kommunikationsstufe 23. Die Hardwarestufe 22 ist mit den Input-/Outputkarten 18 des Hardwareteils RE-HW über eine Steuersignal- und eine Sensorsignalleitung 24 bzw. 25 verbunden. Die Kommunikationsstufe 23 liefert an das Steuermodul SM Modulzustands- und Modulabfragedaten (XM3/4) und erhält von diesem Moduleingabedaten und Modulkommandos (SM5/6).

Alle Arbeitsmodule sind in der beschriebenen Art aufgebaut und sind daher austauschbar. Sie können an zukünftige Marktbedürfnisse angepasst, d.h. ausgebaut und modifiziert werden. Jedes Modul ist eine autonome Funktionseinheit und die Intelligenz des Systems ist dezentral angeordnet. Die Systemkonfiguration kann Kundenwünschen weitgehend angepasst werden. Die Modulautonomie ermöglicht eine erhöhte Redundanz einzelner Funktionen und erlaubt, die Module oder Funktionseinheiten einzeln anzusteuern. Die einzelnen Funktionen sind voneinander nur in einem sehr geringen Mass abhängig und Fehler können sehr einfach lokalisiert werden.

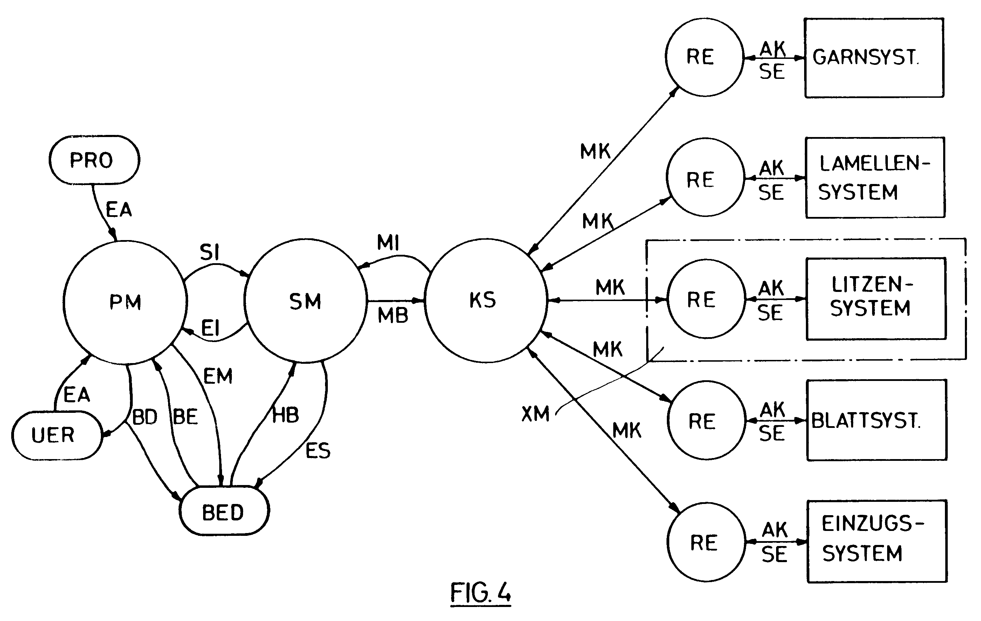

Figur 4 zeigt ein Diagramm des Datenflusses der Einziehmaschine, wobei zur besseren Uebersicht eine von den Fig. 2 und 3 abweichende Darstellungsart gewählt wurde, aus welcher insbesondere ersichtlich ist, dass zwischen den einzelnen Modulen keine direkten Datenquerverbindungen bestehen, sondern dass die Datenquerverbindungen zwischen den Modulen über den übergeordneten Rechner laufen.

In der linken Hälfte der Figur sind das Programmiermodul PM und das Steuermodul SM eingezeichnet, welch letzteres, wie schon erwähnt, den genannten übergeordneten Rechner enthält. Den beiden Modulen PM und SM sind die Programmierschnittstelle PRO, der Host UER und die Bedienerschnittstelle BED zugeordnet. Mit KS ist eine Teil des Steuermoduls SM bildende Kommunikationsstufe bezeichnet, welche im wesentlichen durch ein Datenbussystem gebildet ist. Von der Kommunikationsstufe KM führen Datenleitungen MK für die Modulkommunikation zu den einzelnen Modulen. Diese sind zweistufig dargestellt, wobei mit "System" der den Teilmodulen TM von Fig. 3 entsprechende mechanische Teil jedes Moduls und mit RE der jeweilige Modulrechner bezeichnet ist. Beide Stufen zusammen entsprechen einem Arbeitsmodul XM (Fig. 3), wie dies in Fig. 4 beim Litzenmodul angedeutet ist.

Der Datenfluss vom Programmiermodul PM und den mit diesem verbundenen Schnittstellen bis zu den Modulen verläuft folgendermassen: Das Programmiermodul PM erhält von der Programmierschnittstelle PRO und vom Host UER Einzugsanleitungen EA und von der Bedienerschnittstelle BED Bedienereingaben BE und liefert an das Steuermodul SM entsprechende Steuerinformationen SI. Das Steuermodul SM, welches ausserdem von der Bedienerschnittstelle BED eventuelle Handboxbefehle HB erhält, verarbeitet die ihm zugeführten Daten zu Modulbefehlen MB, welche via Kommunikationsstufe KS über die Datenleitungen MK an den entsprechenden Modulrechner RE gelangen und von diesen als Steuersignal AK dem jeweiligen Aktor des Teilmoduls zugeführt werden.

Die Funktion jedes Aktors der Teilmodule wird in der Regel durch einen Sensor überwacht, welcher ein entsprechendes Signal SE an den Modulrechner RE zurückmeldet. Der Modulrechner RE seinerseits kommuniziert mit dem Steuermodul SM via Datenleitung MK und Kommunikationsstufe KS, welche somit an das Steuermodul SM Modulinformationen MI liefert. Das Steuermodul verarbeitet die von den Modulen erhaltenen Daten zu Einzugsinformationen EI an das Programmiermodul PM und liefert ausserdem an die Bedienerschnittstelle BED Informationen ES über den Einzugstatus. Das Programmiermodul PM schliesslich liefert an die Bedienerschnittstelle BED Einzugsmeldungen EM und an die Bedienerschnittstelle BED und an den Host UER Betriebsdaten BD.

Es ist aus diesem Datenflussdiagramm ersichtlich, dass zwischen den einzelnen Modulrechnern keine direkten Querverbindungen bestehen, sondern dass der gesamte Datenfluss in beiden Richtungen ausschliesslich über den im Steuermodul enthaltenen übergeordneten Rechner läuft.

## Patentansprüche

1. Maschine zum automatischen Einziehen von Kettfäden in entsprechende Elemente einer Webmaschine, mit einem Einziehorgan, mit Mitteln zur Handhabung der genannten Elemente, und mit einer Steuerstufe zur Steuerung der verschiedenen Funktionen der Einziehmaschine, dadurch gekennzeichnet, dass:
a. Die Einziehmaschine (SE) aus Modulen (PM, SM, XM) für die verschiedenen Funktionen aufgebaut ist und Arbeitsmodule (XM) für die Durchführung des Einziehprozesses aufweist;
b. die einzelnen Module funktionsfähige, eigenständige Einheiten bilden und miteinander über Schnittstellen verbunden sind, wobei die Arbeitsmodule einen mechanischen Teil und einen Modulrechner (RE) aufweisen; und
c. die Module von einem übergeordneten Rechner gesteuert sind, wobei die Kommunikation zwischen den einzelnen Modulen ausschliesslich über diesen übergeordneten Rechner erfolgt.

2. Maschine nach Anspruch 1, dadurch gekennzeichnet, dass der übergeordnete Rechner in einem die Steuerstufe bildenden Steuermodul (SM) enthalten, und dass neben diesem und den Arbeitsmodulen (XM) ein Programmiermodul (PM) für Maschinenbedienung, Datenkommunikation und Fehleranzeige vorgesehen ist.

3. Maschine nach Anspruch 2, dadurch gekennzeichnet, dass die Steuerung der Arbeitsmodule (XM) durch den übergeordneten Rechner des Steuermoduls (SM) über den jeweiligen Modulrechner (RE) erfolgt, welcher vom übergeordneten Rechner gesteuert und überwacht ist.

4. Maschine nach Anspruch 3, gekennzeichnet durch eines oder mehrere der folgenden Arbeitsmodule (XM): Garnmodul zur Handhabung von Kettbaum (3) und Kettfadenschicht (KF), Einzugsmodul für den Fadeneinzug; Litzenmodul zur Handhabung der Weblitzen (LI); Lamellenmodul zur Handhabung der Kettwächterlamellen (LA); Blattmodul zur Handhabung des Webblatts (WB).

5. Maschine nach Anspruch 4, dadurch gekennzeichnet, dass die Arbeitsmodule (XM) in Teilmodule (TM1, TM2, TM3) für die einzelnen Funktionen des betreffenden Moduls aufgeteilt sind, dass zwischen diesen Teilmodulen ein vom jeweiligen Modulrechner (RE-HW, RE-SW) gesteuerter interner Materialfluss erfolgt, und dass Mittel zur Detektion der Materialübergabe zwischen den Teilmodulen vorgesehen sind.

6. Maschine nach Anspruch 5, gekennzeichnet durch ein Gesamtaufbaumodul (AM) zur Ausführung statischer Hilfsfunktionen, insbesondere von Halte- und Befestigungsfunktionen.

7. Maschinen nach Anspruch 6, dadurch gekennzeichnet, dass das Gesamtaufbaumodul (AM) eine Schnittstelle (ELC, AIR) für den Anschluss an die Versorgung der Einziehmaschine (SE) mit elektrischer und pneumatischer Energie aufweist, und dass im Gesamtaufbaumodul eine Aufbereitung dieser Energie erfolgt.

8. Maschine nach einem der Ansprüche 1 bis 5, dadurch gekennzeichnet, dass die Arbeitsmodule (XM) eine Aufrüster- und eine Abrüsterschnittstelle (AUF bzw ABR) aufweisen, wobei an der Aufrüsterschnittstelle die Zulieferung von Geschirr (LI, LA, WB) und Garn (KF) und an der Abrüsterschnittstelle die Ablieferung des eingezogenen Geschirrs erfolgt.

9. Maschine nach Anspruch 8, dadurch gekennzeichnet, dass das Steuermodul (SM) eine Bedienerschnittstelle (BED) aufweist.

10. Maschine nach Anspruch 9, dadurch gekennzeichnet, dass das Programmiermodul (PM) eine Programmiererschnittstelle (PRO) und eine Schnittstelle (UER) zum Anschluss an einen übergeordneten Rechner aufweist.

## Claims

1. Machine for the automatic drawing-in of warp threads into corresponding elements of a weaving machine, comprising a drawing-in member, means for manipulating the said elements, and a control stage for controlling the various functions of the drawing-in machine, characterized in that:
a. The drawing-in machine (SE) is composed of modules (PM, SM, XM) for the various functions and comprises working modules (XM) for carrying out a drawing-in procedure;
b. the individual modules form functional, independent units and are connected to one another via interfaces and whereas the working modules comprise a hardware part and a module computer (RE); and
c. the modules are controlled by an higher-level computer, the communication between the individual modules running exclusively via this higher-level computer.

2. Machine according to Claim 1, characterized in that a control module (SM) forming the control stage comprises the higher-level computer and that a programming module (PM) for machine operation, data communication and fault indication is arranged in parallel to said control module (SM) and a number of working modules (XM).

3. Machine according to Claim 2, characterized in that control of the working modules (XM) by the higher-level computer of the control module (SM) is performed by means of the respective module computer (RE) which is controlled and monitored by the higher-level computer.

4. Machine according to Claim 3, characterized by one or more of the following working modules (XM): Yarn module for manipulating the warp beam (3) and warp-thread layer (KF); Draw-in module for drawing in the thread; Heald module for manipulating the healds (LI); Drop-wire module for manipulating the warp-stop-motion drop wires (LA); Reed module for manipulating the reed (WB).

5. Machine according to Claim 4, characterized in that the working modules (XM) are split up into sub-modules (TM1, TM2, TM3) for the individual functions of the relevant module, in that an internal material flow controlled by the respective module computer (RE-HW, RE-SW) takes place between these submodules, and in that means for detecting the material transfer between the submodules are provided.

6. Machine according to Claim 5, characterized by an overall system module (AM) for performing static auxiliary functions, in particular holding and fastening functions.

7. Machine according to Claim 6, characterized in that the overall system module (AM) has an interface (ELC, AIR) for connecting to the means of supplying the drawing-in machine (SE) with electric and pneumatic energy, and in that this energy is processed in the overall system module.

8. Machine according to one of Claims 1 to 5, characterized in that the working modules (XM) have a set-up and a take-down interface (AUF and ABR), harness (LI, LA, WB) and yarn (KF) being supplied at the set-up interface and drawn-in harness being delivered at the take-down interface.

9. Machine according to Claim 8, characterized in that the control module (SM) has an operator interface (BED).

10. Machine according to Claim 9, characterized in that the programming module (PM) has a programming interface (PRO) and an interface (UER) for connecting to an higher-level computer.

## Revendications

1. Machine pour rentrer automatiquement les fils de chaîne dans les éléments correspondants d'une machine à tisser, comprenant un élément de rentrage, des moyens de manipulation desdits éléments de rentrage ainsi qu'un élément de commande des diverses fonctions de la machine à rentrer les fils, caractérisée en ce que
a. la machine pour rentrer les fils (SE) est composée de modules (PM, SM, XM) pour les différentes fonctions et comprend des modules de travail (XM) pour exécuter la procédure de rentrage des fils,
b. les différents modules forment des unités fonctionnant de manière indépendente et sont reliés les uns aux autres par des interfaces, les modules de travail comprenant une partie mécanique et un ordinateur de module (RE), et en ce que
c. les modules sont commandés par un ordinateur de niveau supérieur qui est utilisé pour la communication entre les modules individuels qui se fait exclusivement à travers cet ordinateur supérieur.

2. Machine selon la revendication 1, caractérisée en ce que l'ordinateur de niveau supérieur fait partie d'un module de commande (SM) qui constitue une unité de commande, en ce que un module de programmation (PM) pour la commande de la machine, la communication de données et l'indication d'erreurs est disposé en parallèle à ce module de commande (SM) et ces modules de travail (XM).

3. Machine selon la revendication 2, caractérisée en ce la commande des modules de travail (XM) par l'ordinateur de nivéau supérieur du module de commande (SM) se fait par l'intermédiaire d'un ordinateur de module (RE) qui est commandé et surveillé par l'ordinateur de nivéau supérieur.

4. Machine selon la revendication 3, caractérisée par un ou plusieurs des modules de travail (XM) suivants: Module du fil pour le maniement de l'ensouple de chaîne (3) et de la couche de fils (KF), module de rentrage pour rentrer les fils, module de lisses pour le maniement des lisses (LI), module de lamelles pour le maniement des lamelles (LA), module de peigne pour le maniement du peigne (WB).

5. Machine selon la revendication 4, caractérisée en ce que les modules de travail (XM) sont partagés en modules partiels (TM1, TM2, TM3) pour les différentes fonctions du module en question, en ce que un transfer de matériel interne contrôlé par l'ordinateur de module (RE-HW, RE-SW) respectif se fait entre ces modules partiels et en ce que des dispositifs pour détecter le transfer de matériel entre les modules partiels sont prévus.

6. Machine selon la revendication 5, caractérisée par un module général (AM) destiné à exécuter des fonctions d'appoint statiques, particulièrement des fonctions de fixation et de support.

7. Machine selon la revendication 6, caractérisée en ce que le module général (AM) est pourvu d'un interface (ELC, AIR) destiné à relier la machine (SE) à une alimentation en énergie électrique et pneumatique et en ce que cette énergie est traitée dans le module général.

8. Machine selon une des revendications 1 à 5, caractérisée en ce que les modules de travail (XM) sont équipés d'un interface de montage où se fait le montage du harnais (LI, LA, WB) et du fil (KF) et un interface de démontage (AUF ou ABR) où se fait le démontage du harnais avec le fil rentré.

9. Machine selon la revendication 8, caractérisée en ce que le module de commande (SM) a un interface de commande (BED).

10. Machine selon la revendication 9, caractérisée en ce que le module de programmation (PM) a un interface de programmation (PRO) et un interface (UER) de raccordement à un ordinateur de nivéau supérieur.
